# EUROPEAN PATENT APPLICATION

(11) **EP 0 846 613 A1**
(43) Date of publication of application: **10.06.1998**
(21) Application number: 97500192.6
(22) Date of filing: 12.11.1997
(51) Int. Cl.: B62D 33/00, B60J 7/06

(54) **Sliding cover for cargo vehicles**

(30) Priority: 12.11.1996 ES 9602378
(71) Applicant: Tres Carroceros, S.L., 46930 Quart de Poblet, Valencia (ES)
(72) Inventor: Sànchez, Emilio Ballesteros, 46930 Quart de Poblet, Valencia (ES)
(74) Representative: Perez Bonal, Bernardo

(57) **Abstract**

It consists of a series of guides (5,6) situated on the upper part for holding the cargo, which hold a canvas cover (9), in such a way that said cover may be folded towards the front part of the hold (4), and which once folded, a part or covering of said guides (5,6) may be displaced over the cabin (1) of the vehicle.

Applicable in the manufacture of sliding covers for cargo vehicles.

## Description

The technical sector of this patent is that of the manufacture of covers for cargo vehicles, especially sliding covers for cargo vehicles.

One necessity of large cargo vehicles often is that of loading from above, so that using a crane the hold of the vehicle may be filled.

For this reason canvas covers which may be folded along the bracket in the upper sides of the hold of the vehicles by means of carriages which are moved longitudinally through a guide are used.

One of the disadvantages of this type of cover is the folds of the canvas and the juxtaposition of the carriages which carry this canvas in the front part of the hold, which make the useful area of access of the crane less than the total length of the hold by one or two metres, thus making necessary either a worker to position the articles deposited, which work is often impossible because of the weight or shape of said articles, or else a loading space is wasted, which makes transport more expensive as for the same global cost a smaller capacity is used.

Indication of the State of the Art.

One solution which was attempted to give to this problem was the prolongation of each of the guides carrying the carriages which carry the covering canvas, by means of the addition of sections of guide placed in such a way that each of them turns on hinges placed in each of the upper front corners of the hold of the vehicle. These guides, which when the vehicle was not being loaded were placed parallel (180° from the main guide), when it is necessary to load should be folded down by a 180° turn to be placed as a continuation of said main guide. The disadvantage of this method is that great deformations are caused in the area of union of the two fragments of guide, even making them unworkable. Moreover, two operations must be carried out during loading, first the folding down and a second of sliding the cover.

Another possible solution would be to use guides longer than the length of the hold, but in this case we would have the inconvenience of having "horns" on the vehicle which would be hard to have approved, apart from the problems which could arise from their getting caught, for instance in tree branches.

The purpose of this invention is to manufacture a cover for a cargo vehicle which avoids the inconveniences posed and is easy and safe to use.

It consists of a set of guides placed on the upper part used to hold the load, which hold a canvas cover, in such a way that said cover can be folded toward the front part of the hold, and which once folded, allows a part or a covering of said guides to be moved over the top of the cabin of the vehicle.

In order to make the following explanation clearer, attached to the present descriptive memory there is a page of drawings with three figures representing the essence of this invention.

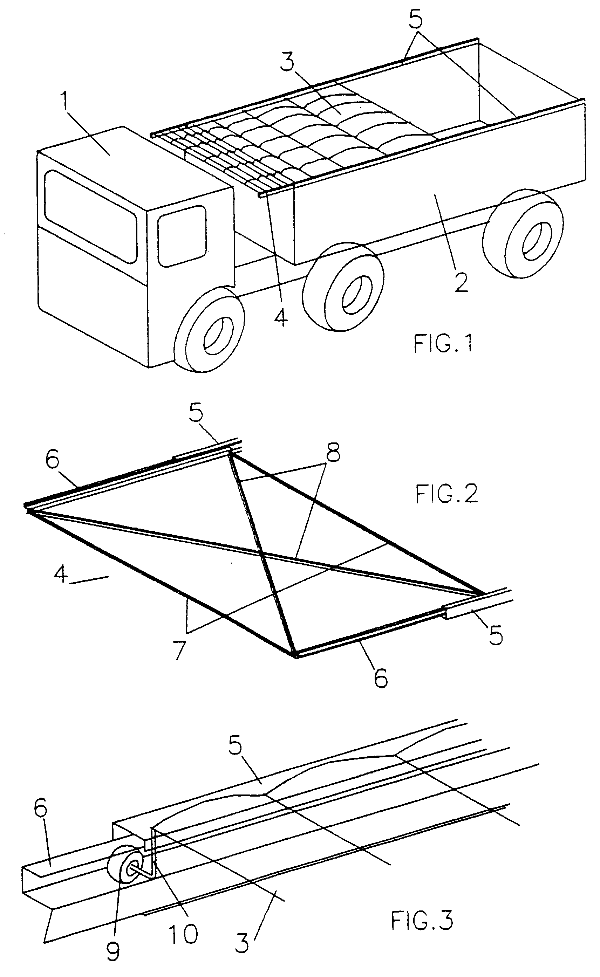

Figure 1 shows a complete view of the invention, showing a vehicle with its sliding cover.

Figure 2 shows the tip of the guides revealing the sliding section which forms a rigid structure.

Figure 3 shows the guide with the sliding guide on top in detail, displaying the placement of the sliding carriage bearing the cover.

In said figures a vehicle carrying a hold is shown as number 1, 2 is said hold, 3 is the cover of said hold, 4 is the overlapping part of the cover of said hold, 5 shows the main guides, 6 the sliding guides as regards the main guides, 7 and 8 the crosspieces which give the sliding part rigidity, 9 is the wheel of a carriage bearing the structure which holds the cover, and 10 is structure which holds the cover.

Explanation of a manner of realisation.

In the upper part of the cover of the hold of the vehicle respective guides made from a resistant material, usually aluminium, although other types of materials which fulfil the required conditions of resistance could be used, are placed at each side. These guides support carriages which carry the cover for the vehicle hold, placed on either side and bearing the cover itself by means of a structure which joins them. Said guides have at least one wheel situated on the inside, although it is possible to put additional wheels on the inside of the sides of the guide. Each of the pieces has a covering which reproduces the shape of said piece, especially in the part where the wheel-guides bearing the cover is situated. The covering of the pieces is longer than is necessary to fit the whole of the cover in its folded position, in other words, with the hold totally opened, and each covering may be displaced axially over the piece which it covers, in such a way as to permit the displacement of the folded cover over the upper front part of the hold, allowing access to the whole of the loading area. The material will be resistant enough to carry the weight of the cover. As the coverings are held over a structure which joins them to said structure, the structure or the coverings themselves are provided with displacement stops which avoid excessive tension in the opening stage, and which are folded towards the back of said hold. The structure joining the movable coverings of the guides is situated underneath the plane defined by said coverings.

It is of industrial application in the manufacture of sliding covers for cargo vehicles.

## Claims

1. Sliding cover for cargo vehicles, having on the upper side edges of the hold respective carriage bearing guides, bearing the structure which holds the cover, characterised in that it has a covering over the guides which adopts a covering profile similar to that of the external surface of said guides, at least in the area where said carriages move, which may be displaced axially over said guides, allowing the displacement of the cover bearing carriages along the length of the same.

2. Cover, according to claim 1, characterised in that the coverings of the guides are joined to each other by means of a structure.

3. Cover, according to claim 2, characterised in that the structure joining the coverings of the guides is situated underneath the plane defined thereby.

4. Cover, according to claim 1, characterised in that the guides have a stop in both directions of displacement.

5. Cover, according to claim 1, characterised in that the structure bearing the guides has a displacement stop.
